# EUROPEAN PATENT APPLICATION

(11) **EP 1 178 391 A2**
(43) Date of publication of application: **06.02.2002**
(21) Application number: 01117628.6
(22) Date of filing: 24.07.2001
(51) Int. Cl.: G06F 3/12

(54) **Data transferring apparatus and method, printing machine, printing method and printing system**

(30) Priority: 31.07.2000 JP 2000231890
(71) Applicant: RISO KAGAKU CORPORATION, Tokyo (JP)
(72) Inventor: Akiyama, Hideki, Riso Kagaku Corporation, Inashiki-gun, Ibaraki-ken (JP); Higashio, Nami, Riso Kagaku Corporation, Inashiki-gun, Ibaraki-ken (JP); Hirata, Musashi, Riso Kagaku Corporation, Inashiki-gun, Ibaraki-ken (JP)
(74) Representative: HOFFMANN - EITLE

(57) **Abstract**

When printing is performed by a stencil printing machine, a designation display 25 of a message is displayed for prompting input of a message, thus enabling message information to be inputted thereto. Then, contents specified on the designation display 25 of a message are set as the message information, and message-added print data is transmitted to the stencil printing machine. Thus, in the stencil printing machine, the contents of the messa0ge are submitted to a user operating the stencil printing machine, separately from the print data.

## Description

### BACKGROUND OF THE INVENTION

The present invention relates to a data transferring apparatus and a data transferring method for transferring print data obtained by adding a message to image data, and to a printing machine, a printing method and a printing system for printing the print data transferred to the printing machine.

Typically, when a printer driver mounted on a host computer transmits print data to a printing machine for printing by means of software, the software outputs images, characters and the like, which are displayed on a display mechanism such as a CRT and a liquid crystal display screen of the host computer.

Depending on a printer driver, information concerning the host computer or a logging-in user may be added to print data in some cases. Moreover, there have been known software that retrieves and re-displays the print data outputted once to a file by use of the printer driver, software which adds information concerning a host computer or a logging-in user to the print data, and software which allows the print data to be transmitted and received between host computers through a network or a telephone line.

Heretofore, a machine for network printing has been known, which receives print data transmitted from a host computer through a communication line, and prints image data included in the print data.

In many cases, the print data transmitted to the printing machine described above are typically composed of an image data portion displaying an image and a data information portion indicating various kinds of information concerning the print data.

Such information added to the print data are varied depending on application software or a printer driver of a host computer transmitting the print data. The information includes a host name of the host computer and a name of a user operating the host computer to log-in there.

Presence of two print modes for the printing machine has been known: one is a local mode, in which only the image data portion included in the print data is printed upon receiving the print data from the host computer; and the other is a remote mode, in which the print data is not printed soon upon receipt from the host computer, but data information of the received print data is displayed on the display mechanism such as a liquid crystal display device, and the print data is printed after a user confirms the contents of the image data and the like. The conventional printing machine is operated at a mode selected from the foregoing local mode and remote mode, which are switched by the user.

The method of transferring print data from a first user to a second user includes: a method of transferring print data by printing the same through a printer driver from an application program; a method of transferring a file including the print data as a portable medium such as a floppy disk; and a method of transferring print data through a network or a telephone line.

In this case, the contents of the print data are transferred by the foregoing method when the first user does not need to allow the print data to have a particular meaning, that is, when the first user does not need to transfer a message concerning the print data, for example, designation of a date for printing, separately from the print data. However, for example, when the first user needs to transfer a particular meaning, that is, a message concerning the print data, the first user needs to transfer the message concerning the print data by other methods than the foregoing method of transferring print data from the first user to the second user, by other means. In this case, the first user transfers, for example, a date when the data need to be printed, as a message concerning the print data to the second user residing remotely by means such as a telephone or a facsimile.

In the case where the foregoing remote mode is set, when the printing machine receives the print data from the host computer, the information concerning a data transmitter, which indicates from which host computer the print data is transmitted, or the contents of the print data indicating what contents the print data has, cannot be readily determined from the data information portion of the print data in many cases.

### SUMMARY OF THE INVENTION

The present invention was proposed with the foregoing actual circumstances in mind. An object of the present invention is to transfer data including a message other than the print data by providing a function of inputting a message concerning the print data.

Another object of the present invention is to enable easy determination of the contents of the transmitted print data by displaying contents of the print data on a display mechanism of a printing machine.

In order to solve the foregoing subjects, according to the present invention, provided is a data transferring apparatus for transmitting print data to be printed by a printing machine connected thereto through a communication line, comprising: operation inputting section for making message information added to the print data including image data and print information concerning the image data in response to an operation by a user; print-data making section for making message-added print data by adding the message information made by the operation inputting section to the print data; and transmitting section for transmitting the message-added print data made by the print-data making section through the communication line.

When the data transferring apparatus as described above commands the printing machine to perform a printing process, the message information is added to the print data in response to the operation by the user and is transmitted to the printing machine together with the print data.

In order to solve the foregoing subjects, according to the present invention, provided is a data transferring method for transmitting print data to be printed by a printing machine connected thereto through a communication line, comprising the steps of: making message information to be added to print data including image data and print information concerning the image data in response to an operation by a user; adding the made message information to the print data to make message-added print data; and transmitting the message-added print data thus made through the communication line.

When the data transferring method as described above commands the printing machine to perform a printing process, the message information is added to the print data in response to the operation by the user and is transmitted to the printing machine together with the print data.

In order to solve the foregoing subjects, according to the present invention, provided is a printing machine comprising: printing section for performing printing; receiving section for receiving message-added print data obtained by adding message information made by a data transmitting instrument to print data transmitted from the data transmitting instrument, the print data including image data to be printed by the printing section and print information concerning the print data, the receiving section being connected to the data transmitting instrument through a communication line; displaying section for displaying the message information included in the message-added print data received by the receiving section; and controlling section for performing control to take the message information concerning the image data out of the print data received by the receiving section and to display contents of the message information on the displaying section.

In the printing machine as described above, when the message-added print data from the data transmitting instrument is inputted, the contents of the message indicated in the message information made by the data transmitting instrument are displayed before printing is performed.

In order to solve the foregoing subjects, according to the present invention, provided is a printing method comprising the steps of: receiving message-added print data through a communication line from a data transmitting instrument, the message-added print data being obtained by adding message information made by the data transmitting instrument to print data transmitted from the data transmitting instrument, the print data including image data to be printed by printing section and print information concerning the print data; displaying the message information included in the received message-added print data; and printing contents of the image data included in the message-added print data in accordance with a request for printing.

In the printing method as described above, when the message-added print data from the data transmitting instrument is inputted, the contents of the message indicated in the message information made by the data transmitting instrument are displayed before printing is performed.

In order to solve the foregoing subjects, according to the present invention, provided is a printing machine, comprising: printing section for performing printing; receiving section for receiving message-added print data obtained by adding message information made by a data transmitting instrument to print data transmitted from the data transmitting instrument, the print data including image data to be printed by the printing section and print information concerning the print data, the receiving section being connected to the data transmitting instrument through a communication line; and controlling section for performing control to take the message information concerning the image data out of the print data received by the receiving section and to print contents of the message information and of the image data by the printing section.

In the printing machine as described above, when the message-added print data from the data transmitting instrument is inputted thereto, the contents of the image data and the contents of the message indicated in the message information made by the data transmitting instrument are printed.

In order to solve the foregoing subjects, according to the present invention, provided is a printing method comprising the steps of: receiving message-added print data through a communication line from a data transmitting instrument, the message-added print data being obtained by adding message information made by the data transmitting instrument to print data transmitted from the data transmitting instrument, the print data including image data to be printed by printing section and print information concerning the print data; taking the message information out of the received message-added print data; and printing contents of the message information and of the image data.

In the printing method as described above, when the message-added print data from the data transmitting instrument is inputted, the contents of the image data and the contents of the message indicated in the message information made by the data transmitting instrument are printed.

In order to solve the foregoing subjects, according to the present invention, provided is a printing system for printing print data by a printing machine, the print data being transmitted from a data transferring apparatus to be printed by the printing machine connected thereto through a communication line, comprising: a data transferring apparatus including: operation inputting section for making message information to be added to the print data including image data and print information concerning the image data in response to an operation by a user; print-data making section for making message-added print data by adding the message information made by the operation inputting section to the print data; and transmitting section for transmitting the message-added print data made by the print-data making section to a printing controlling apparatus connected to the printing machine through the communication line; the printing controlling apparatus for receiving the message-added print data transmitted from the. transmitting section and for outputting at least the image data to the printing machine; and the printing machine for performing printing by use of the image data transmitted from the printing controlling apparatus.

In the printing system as described above, when the printing system commands the printing machine to perform a printing process, the message information in response to the operation by the user is added to the print data, and is transmitted to the printing machine together with the print data.

In order to solve the foregoing subjects, according to the present invention, provided is a printing system comprising: a data transmitting apparatus for transmitting message-added print data obtained by adding message information to print data including image data and print information concerning the image data; and a printing machine including: printing section for performing printing; receiving section for receiving the message-added print data, the receiving section being connected to the data transmitting apparatus through a communication line; displaying section for displaying the message information included in the message-added print data received by the receiving section; controlling section for performing control to take the message information concerning the image data out of the print data received by the receiving section and to display contents of the message information on the displaying section.

In the printing system as described above, when the message-added print data from the data transmitting apparatus is received by the printing controlling apparatus, the contents of the message indicated in the message information made by the data transmitting apparatus are displayed before printing is performed.

In order to solve the foregoing subjects, according to the present invention, provided is a printing system comprising: a data transmitting apparatus for transmitting message-added print data obtained by adding message information to print data including image data and print information concerning the image data; and a printing machine including: printing section for performing printing; receiving section for receiving the message-added print data, the receiving section being connected to the data transmitting apparatus through a communication line; and controlling section for performing control to take the message information concerning the image data out of the print data received by the receiving section and to print contents of the message information and of the image data by the printing section.

In the printing system as described above, when the message-added print data is transmitted from the data transmitting apparatus to the printing machine, the contents of the image data and the contents of the message indicated in the message information made by the data transmitting apparatus are printed with the printing machine.

### BRIEF DESCRIPTION OF THE DRAWINGS

Fig. 1 is a constitutional view of a network system to which the present invention is applied.
Fig. 2 is a view illustrating a display screen displayed when message-added print data are made by a transmissive personal computer (PC) to which the present invention is applied.
Fig. 3 is a view illustrating a display screen shown when various contents are specified in a case when the transmissive PC to which the present invention is applied commands a stencil printing machine to perform printing.
Fig. 4 is a view illustrating a display screen shown when image data are selected in a case when the transmissive PC to which the present invention is applied commands the stencil printing machine to perform printing.
Fig. 5 is a view illustrating a display screen on standby for transmission in a case when the transmissive PC to which the present invention is applied commands the stencil printing machine to perform printing.
Fig. 6 is a view illustrating a display screen shown when a receiving PC receives the message-added print data.
Fig. 7 is a view illustrating a display screen displayed when the message-added print data is made by the transmissive personal computer (PC) to which the present invention is applied.
Fig. 8 is a view illustrating a display screen shown when a message is specified by the transmissive PC to which the present invention is applied.
Fig. 9 is a view illustrating a display screen displayed when the transmissive PC to which the present invention is applied is on standby for transmission of the message-added print data.
Fig. 10 is a constitutional view of another network system to which the present invention is applied.
Fig. 11 is a view illustrating display contents of the message-added print data received by the stencil printing machine to which the present invention is applied.
Fig. 12 is a view illustrating contents of the message printed when the stencil printing machine to which the present invention is applied receives the message-added print data. Fig. 13 is a flowchart illustrating a processing procedure when printing is performed by a stencil printing machine to which the present invention is applied.

### DETAILED DESCRIPTION OF THE PREFERRED EMBODIMENTS

Hereinbelow, description will be made in detail for embodiments of the present invention with reference to the drawings.

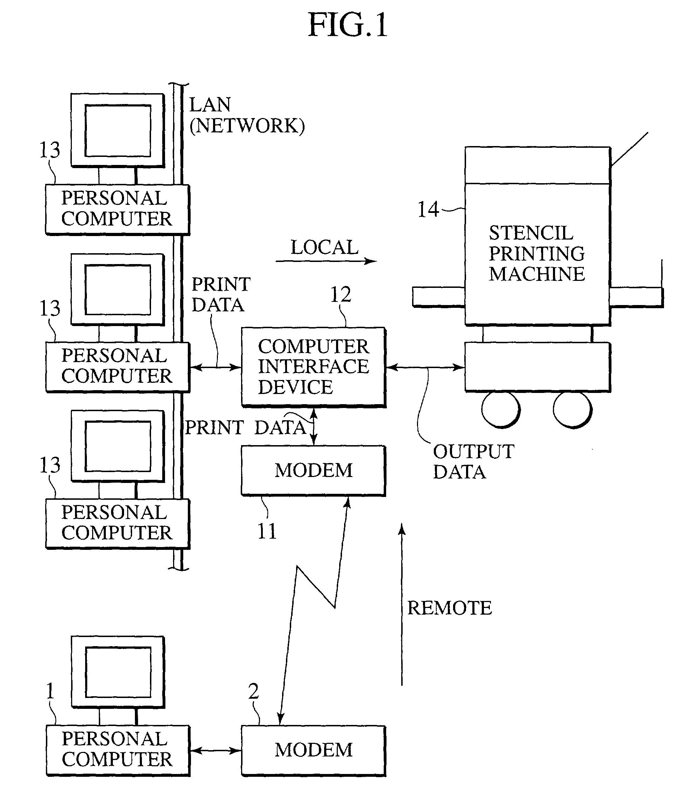

The present invention is applied to, for example, a network system constituted as shown in Fig. 1.

The network system comprises: a transmissive personal computer (PC) 1 transmitting print data; a transmissive modem 2; a receiving modem 11; a computer interface device 12; a plurality of receiving PCs 13 connected to a local area network (LAN); and a stencil printing machine 14.

The transmissive PC 1 comprises: an operation input function operated by a user; a computing function of performing a specified processing by the operation input function; a display function of displaying various contents on a display monitor; and a data transferring function of transferring print data. The transmissive PC 1 executes various kinds of processing in accordance with a printing application program for transmitting the print data to the stencil printing machine 14 and commanding the same to perform printing.

By executing the printing application program in response to the operation by the user, the transmissive PC 1 displays image data on a display monitor by means of the display function, and creates, on the specified image data, print data by adding printing information such as a data size of the specified image data, a transmitted date and print setting.

Moreover, by executing the printing application program in response to the operation by the user, the transmissive PC 1 makes message information to be added to the print data, and makes print data with the message information added thereto. The message information is information concerning the printing process, which indicates a message or a comment inputted through the operation by the user, for example, designation of a printed date.

Furthermore, the transmissive PC 1 converts the created message-added print data into a data format that the stencil printing machine 14 can interpret to execute the printing process, and then outputs the converted print data to the transmissive modem 2.

The transmissive modem 2 has a function of transmitting the created message-added print data from the transmissive PC 1 to the receiving modem 11 located remotely. The transmissive modem 2 converts the message-added print data in accordance with a specified data transferring protocol common to that for the receiving modem 11, and transmits the converted print data to the receiving modem 11.

The receiving modem 11 receives the message-added print data from the transmissive modem 2 in accordance with the specified data transferring protocol common to that for the transmissive modem 2, and outputs the received message-added print data to the computer interface device 12.

The computer interface device 12 receives input of the message-added print data from the receiving modem 11, and outputs the received print data to the receiving PCs 13. In addition, the computer interface device 12 serves for inputting/outputting of various data or commands and the like between the receiving PCs 13 and the stencil printing machine 14.

The receiving PCs 13 are connected through the local area network (LAN). Each of the receiving PCs 13 receives the message-added print data from the transmissive modem 2.

By executing the printing application program in response to the operation by the user, the receiving PC 13 displays the message-added print data from the transmissive modem 2 on the display monitor and submission to the user. In this case the receiving PC 13 displays contents of the message and contents of the print data.

The stencil printing machine 14 performs stencil printing based on the print data when the print data from the computer interface device 12 are inputted.

Now, description will be made for an example where the message-added print data are made by the transmissive PC 1 and transmitted to the receiving PCs 13 in the above-described network system.

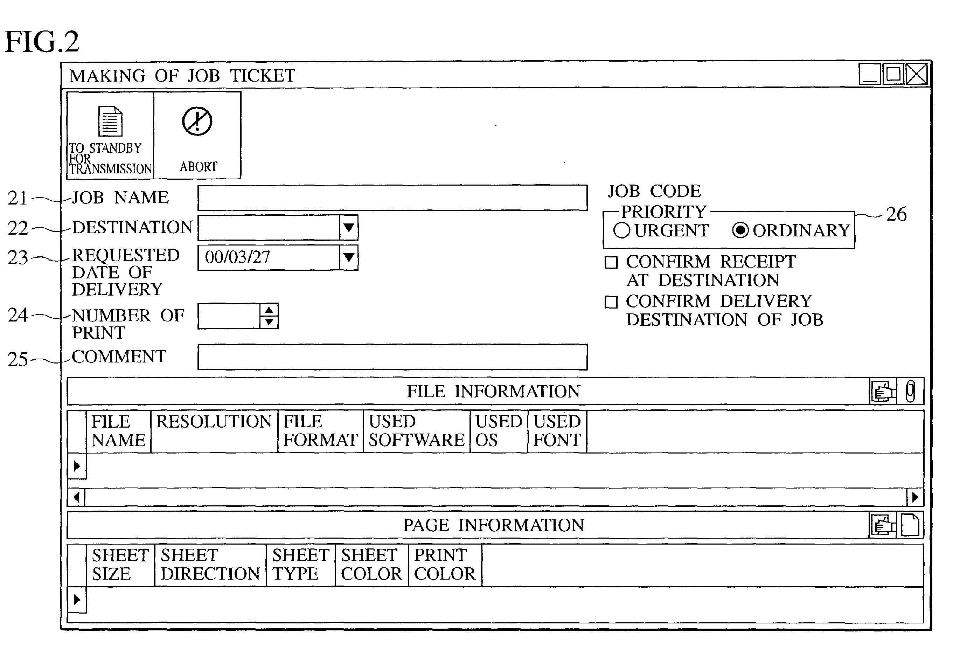

When the transmissive PC 1 transmits the message-added print data to the receiving PCs 13, first, the transmissive PC 1 displays a display screen as shown in Fig. 2 in response to the operation by the user.

According to Fig. 2, by executing the printing application program for transmitting the print data by the user, the transmissive PC 1 displays a display screen prompting setting of a designation display 21 of a job name indicating a name of a print job, a designation display 22 of destination of the message-added print data, a designation display 23 of a requested date of delivery, a designation display 24 of the number of prints, a designation display 25 of a message and a designation display 26 of a priority.

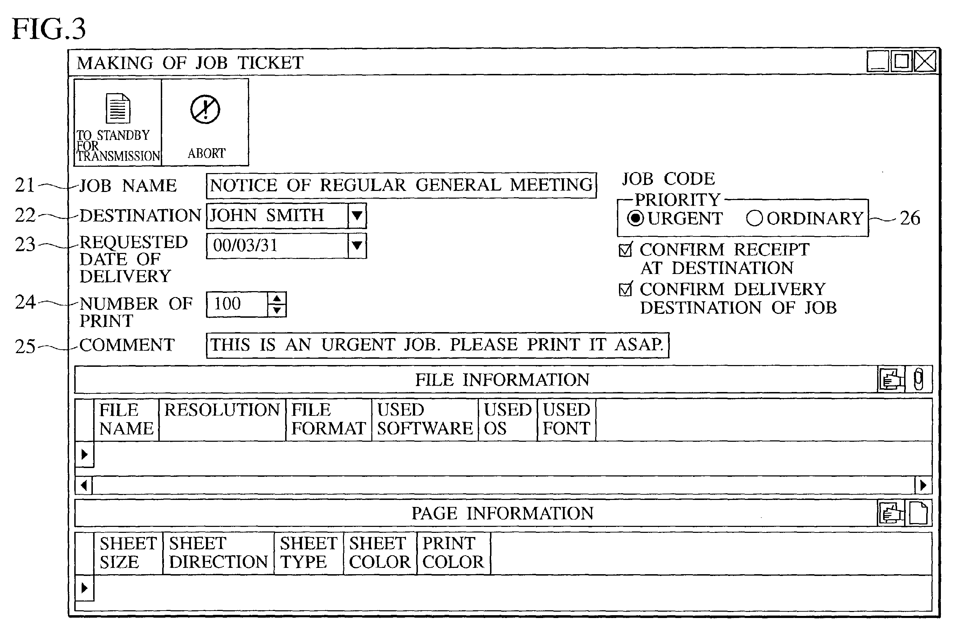

Next, in a state where the display screen shown in Fig. 2 is displayed, the transmissive PC 1 is set in accordance with the various designation displays in response to the operation by the user as shown in Fig. 3. And when a comment telling, for example, "This is an urgent job. Please print is ASAP." is set in the designation display 25 of a message, the transmissive PC 1 makes the message information indicating the contents of the comment.

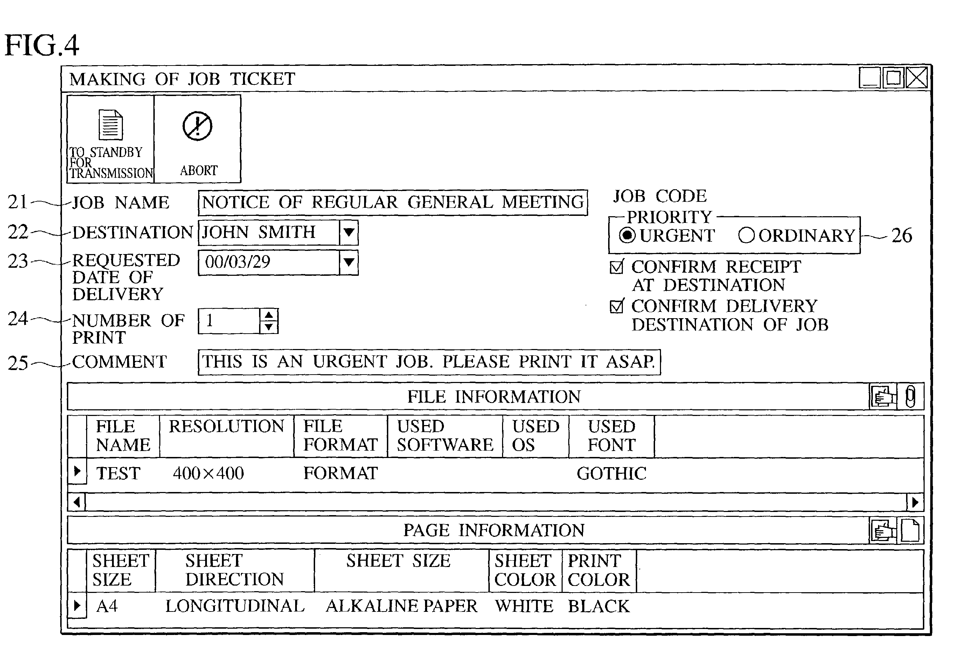

Next, as shown in Fig. 4, in the transmissive PC 1, the print data is designated in a state where the contents of the comment are designated. In this case, as file information when the print data is designated, the transmissive PC 1 displays file name information of a designated image data, resolution information when the image data is printed by the stencil printing machine 14, file format information indicating a file format of the image data, used application information for making the image data, used OS information and used font information indicating a font used in the image data, and submits all the above to the user. In addition, as page information corresponding to the file information indicating the print setting for printing, the transmissive PC 1 displays sheet size information, sheet direction information, sheet type information, sheet color information and print color information, and submits all the above to the user.

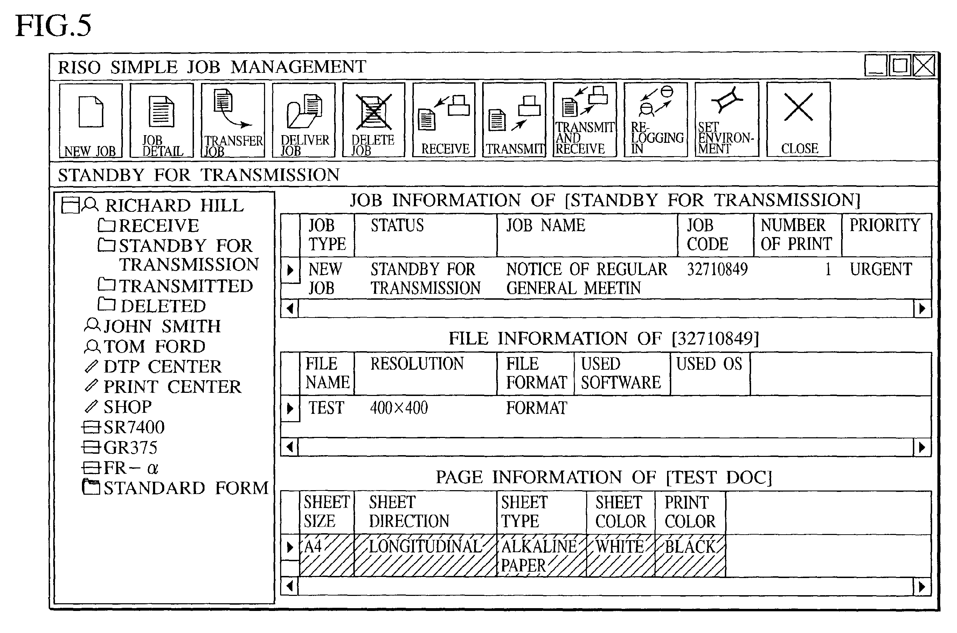

Next, the transmissive PC 1 adds the message information shown in the designation display 25 of a message of Fig. 3, and determines the print data indicated for printing the print data as shown in Fig. 4 in the print setting as indicated by the page information. Then, as shown in Fig. 5, these print data are set standby for transmission.

According to Fig. 5, as job information concerning the print job on standby for transmission, the transmissive PC 1 displays job type information indicating a type of the print job, status information indicating a current state of the print job, job name information indicating a name of the print job, job code information indicating a code name of the print job, information about number of prints, priority information, information about a requested date of delivery and delivery schedule information, and submits all of the above to the user. In addition, the transmissive PC 1 displays the file information and the page information, and submits the same to the user.

Thus, even when the user operating the transmissive PC 1 informs the user operating the receiving PC 13 to print the print data by the stencil printing machine 14 very urgently, as shown in Fig. 2, the contents concerning the printing in the stencil printing machine 14 can be designated in the designation display portion 25, and the message-added print data added with the message information indicating the contents concerning the printing can be made.

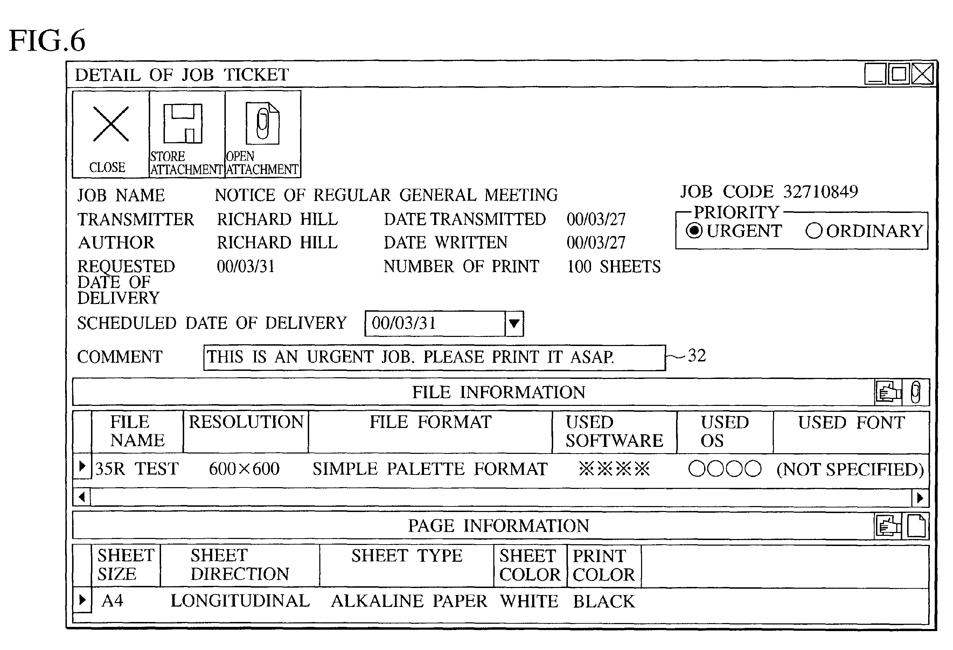

When the transmissive PC 1 executes a print job concerning the message-added print data set on standby for transmission as shown in Fig. 5 and transmits the message-added print data to the receiving PC 13, a display screen as shown in Fig. 6 is displayed on the receiving PC 13. In this case, by analyzing the contents of the message-added print data, the receiving PC 13 performs processes of taking out the print information added to the image data and taking out the message information.

According to Fig. 6, by analyzing the print information, the receiving PC 13 displays transmitter information indicating the user operating the transmissive PC 1, author information indicating the user having written the print data, the information of a requested date of delivery, transmitted date information, made date information, the information of the number of prints and the job code information, and submits all the above to the user. In addition, by analyzing the print information, the receiving PC 13 further displays the file information and the page information, and submits the same to the user.

Moreover, the receiving PC 13 displays a designation display 31 of a scheduled date of delivery, displays a designation display 32 of a comment by analyzing the message information, and submits the contents of the message to the user.

Thus, the receiving PC 13 submits not only the print data but also the designation display 32 of a comment to the user, thus informing the user that the print data is to be printed by the stencil printing machine 14 very urgently.

Hence, according to the network system as described above, even when the user of the transmissive PC 1 must inform the user of the receiving PC 13 executing the printing by the stencil printing machine 14 of the contents of the print data separately, such information to the user of the receiving PC 13 can be made separately from the transmission of the print data by making the message-added print data added with the message information by the transmissive PC 1. Specifically, according to the network system, it is not necessary to transmit the contents concerning the print data separately by telephone or facsimile.

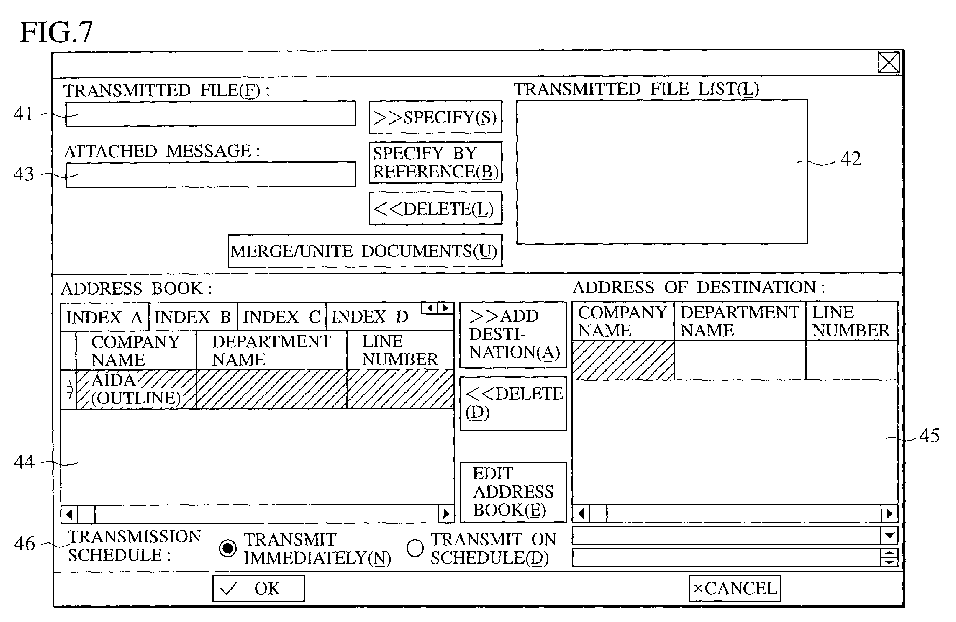

Moreover, the embodiment is not limited to the example described above, but a display screen as shown in Fig. 7 may be displayed when the message-added print data is transmitted to the receiving PC 13. According to Fig. 7, a designation display 41 of a transmitted file for selecting a PDL file as a transmitted file, a transmitted file list display 42 for listing PDL files set in accordance with the designation display 41 and a designation display 43 of an attached message for making the message information during a transmission dialog may be displayed. Moreover, according to Fig. 7, the transmissive PC 1 displays an address book display 44 for selecting a destination and a display 45 of the address of destination designated in accordance with the address book display 44. Furthermore, according to Fig. 7, the transmissive PC 1 displays a schedule display 46 for selecting a transmission schedule.

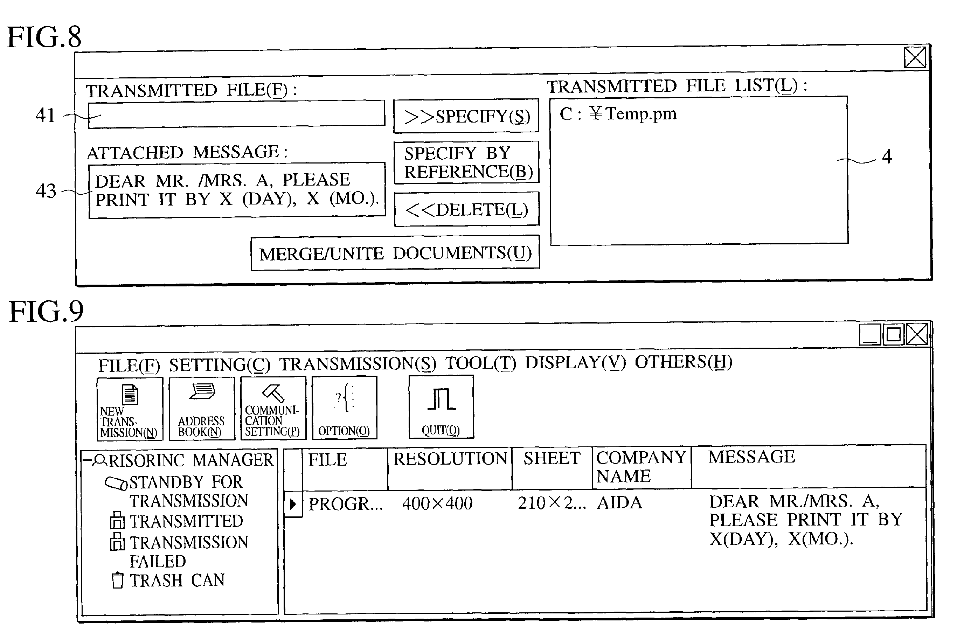

When the transmissive PC 1 displays the display screen as described above, in the transmissive PC 1, the contents of the message is set in the designation display 43 of an attached message as shown in Fig. 8, and the PDL file is set in the designation display 41 of a transmitted file. Thus, the print data with the message information, which is included in the transmitted file, is made.

Next, the transmissive PC 1 makes message information indicating the above contents, displays a display screen of standby for transmission, and is set on standby for transmission. In this case, concerning the PDL file, the transmissive PC 1 displays a file name, a resolution of the file, sheet setting, a company name, a resolution of a printing machine connected, a line number, the contents of the message and the like.

According to the transmissive PC 1 performing the processes as described above, by making the message-added print data added with the message information at a transmission side of the print data similarly to the foregoing, the user of the receiving PC 13 can be informed of the message separately from the transmitted print data.

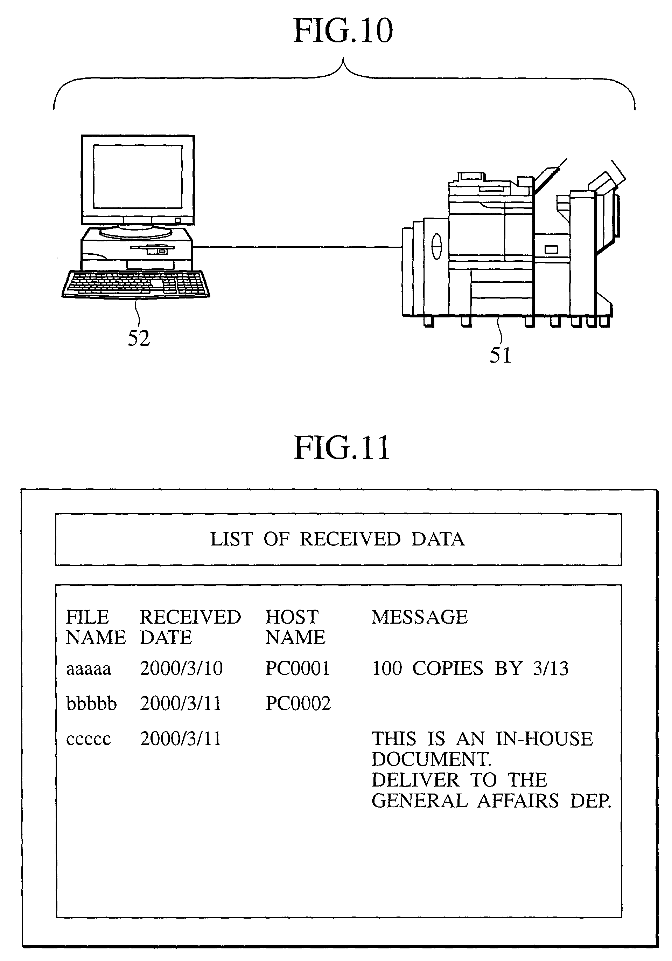

Next, description will be made for a network system of a second embodiment. The network system comprises a stencil printing machine 51 and a host computer 52 as shown in Fig. 10.

The stencil printing machine 51 performs printing corresponding to the contents of the print data for a print medium by performing so-called stencil printing. The stencil printing machine 51 is provided with a display mechanism (not shown) composed of liquid crystal, for example, and displays various contents.

The stencil printing machine 51 is selected from two print modes: one is a local mode, in which only the image data portion included in the print data is printed upon receiving the print data from the host computer 52; and the other is a remote mode, in which the print data is not printed soon after it is sent from the host computer 52, but print information and message information of the received print data are displayed on the display mechanism, and the print data is printed after a user confirms the contents of the image data and the like.

On the host computer 52, a printer driver corresponding to the stencil printing machine 51 is mounted. By operating the printer driver by the user, the message-added print data similar to the above is made, and the message-added print data thus made is transmitted to the stencil printing machine 51 through a communication line.

When set in the remote mode, the stencil printing machine 51 displays the contents as shown in Fig. 11 by a display mechanism (not shown) upon receiving the message-added print data from the host computer 52. The stencil printing machine 51 takes the print information out of the print data with the message to display a file name, a received date and a host name, which are indicated in the print information, and takes out the message information to display the contents of the message indicated in the message information.

According to Fig. 11, for example, the stencil printing machine displays the contents telling "100 copies by 3/31" as the contents of the message corresponding to a file name "aaaaa" and telling " This is an in-house document. Deliver to the General Affairs Dep." as the contents of the message corresponding to a file name "ccccc". Thus, the stencil printing machine 51 submits to the user operating the host computer 52 the effect that 100 copies are to be printed by use of the image data corresponding to the file name "aaaaa" by March 31, and that the in-house document is to be printed by use of the image data corresponding to the file name "ccccc" and to be delivered to the General Affair Department.

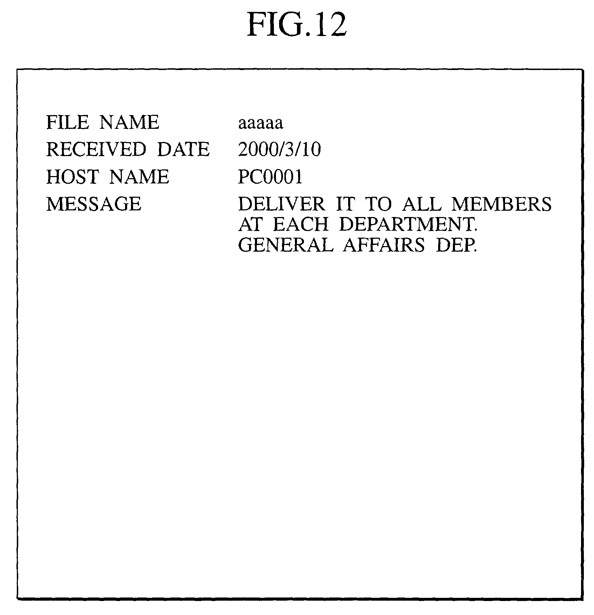

Moreover, upon receiving the message-added print data from the host computer 52 in the case of being set in the foregoing local mode, the stencil printing machine 51 first takes the image data out of the message-added print data. Next, when the message information and the print information are included, as shown in Fig. 12, the stencil printing machine 51 prints the file name, the received date, the host name, the contents of the message based on the print information. Next, the stencil printing machine 51 performs a printing process by use of the image data thus taken out.

According to Fig. 12, for example, the stencil printing machine 51 submits to the user that the contents printed in connection with the file name "aaaaa" shall be distributed to all members at each department as a notice from the General Affairs Department.

Thus, the stencil printing machine 51 can submit the contents of the message to the user by printing the message information, then submit the contents of the image data printed to the user, and submit instructions about the result of previous printing in accordance with the contents of the message.

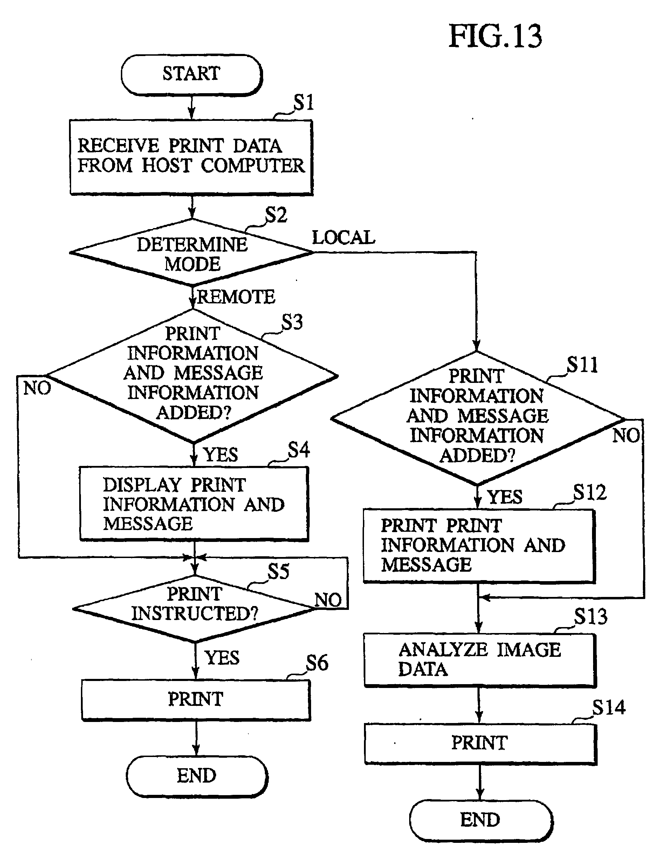

Description will be made for a processing procedure of the stencil printing machine 51 performing the process as described above with reference to Fig. 13. According to Fig. 13, first, upon receiving the message-added print data from the host computer 52 (step S1), a mode set when receiving the print data is determined (step S2).

When it is determined that the remote mode is set, the stencil printing machine 51 determines whether or not the print information and the message information are added to the image data included in the received print data (step S3). When it is determined that the print information and the message information are added, the stencil printing machine 51 displays the print information and the message information on the display mechanism (step S4). Thereafter, or when the stencil printing machine 51 determined that the print information and the message information are not added to the image data, the stencil printing machine 51 determines whether or not the printing instruction is made (step S5).

The stencil printing machine 51 iterates the determination until it is determined that the printing instruction is made, and when the printing instruction is made, the printing process is performed by use of the image data.

On the contrary, when it is determined that the local mode is set in the determining step S2, the stencil printing machine 51 determines whether or not the print information and the message information are added to the received print data (step S11). When the print information and the message information are added to the print data, the stencil printing machine 51 prints the print information and the message information (step S12). Thereafter, or when it is determined that the print information and the message information are not added to the print data, the stencil printing machine 51 analyzes the image data included in the print data (step S13).

Next, the stencil printing machine 51 performs the print process by use of the analyzed image data (step S14). Thus, when the print information and the message information are added to the image data, the stencil printing machine 51 first performs printing by use of the print information and the message information, and then performs printing by use o f the image data.

Hence, according to the network system as shown in Fig. 10, only the message information can be submitted by the user using the stencil printing machine 51, and the contents concerning the printing on the contents of prints printed afterward can be submitted. Therefore, according to the stencil printing machine 51, even when the user operating the host computer 52 and the user using the stencil printing machine 51 reside remotely from each other, or even when a time-lag occurs in communication therebetween, the display or the printing using only the message information can be performed. Accordingly, the message concerning the print data does not have to be transmitted by means of a telephone or a facsimile separately. Furthermore, according to the network system, even the comment at the host computer 52 side, which cannot be determined readily only with reference just to the print information, can be submitted to the user using the stencil printing machine 51 by use of the message information.

The present disclosure relates to subject matter contained in Japanese Patent Application No. P2000-231890 filed on July 31, 2000, the disclosure of which is expressly incorporated herein by reference in its entirety.

Although the invention has been described above by reference to certain embodiments of the invention, the invention is not limited to the embodiments above will occur to these skilled in the art, in the teachings. The scope of the invention is defined with reference to the following claims.

## Claims

1. A data transferring apparatus for transmitting print data to be printed by a printing machine connected thereto through a communication line comprising:
operation inputting section for making message information added to the print data including image data and print information concerning the image data in response to an operation by a user;
print-data making section for making message-added print data by adding the message information made by the operation inputting section to the print data; and
transmitting section for transmitting the message-added print data made by the print-data making section through the communication line.

2. The data transferring apparatus according to claim 1,
wherein the print-data making section converts the print data into a format processible by the printing machine, and
the transmitting section transmits the print data converted by the print-data making section to the printing machine.

3. The data transferring apparatus according to claim 1,
wherein the print-data making section executes an application program for processing print data to make the message-added print data.

4. A data transferring method for transmitting print data to be printed by a printing machine connected thereto through a communication line comprising the steps of:
making message information to be added to print data including image data and print information concerning the image data in response to an operation by a user;
adding the made message information to the print data to make message-added print data; and
transmitting the message-added print data through the communication line.

5. The data transferring method according to claim 4,
wherein the step of transmitting the message-added print data includes the steps of:
converting the print data into a format processible by the printing machine; and
transmitting the converted print data to the printing machine.

6. The data transferring method according to claim 4,
wherein the message-added print data is made by executing an application program for processing the print data.

7. A printing machine comprising:
printing section for performing printing;
receiving section for receiving message-added print data obtained by adding message information made by a data transmitting instrument to print data transmitted from the data transmitting instrument, the print data including image data to be printed by the printing section and print information concerning the print data, the receiving section being connected to the data transmitting instrument through a communication line;
displaying section for displaying the message information included in the message-added print data received by the receiving section; and
controlling section for performing control to take the message information concerning the image data out of the print data received by the receiving section and to display contents of the message information on the displaying section.

8. The printing machine according to claim 7,
wherein the controlling section controls the displaying section to display the print information included in the print data together with the message information.

9. The printing machine according to claim 7,
wherein the data transmitting instrument is composed of a printer driver corresponding to the printing section.

10. A printing method comprising the steps of:
receiving message-added print data through a communication line from a data transmitting instrument, the message-added print data being obtained by adding message information made by the data transmitting instrument to print data transmitted from the data transmitting instrument, the print data including image data to be printed by the printing section and print information concerning the print data;
displaying the message information included in the received message-added print data; and
printing contents of the image data included in the message-added print data in accordance with a request for printing.

11. The printing method according to claim 10,
wherein the step of displaying the message information displays the print information included in the print data is displayed together therewith.

12. The printing method according to claim 10,
wherein the data transmitting instrument is composed of a printer driver corresponding to the printing section.

13. A printing machine comprising:
printing section for performing printing;
receiving section for receiving message-added print data obtained by adding message information made by a data transmitting instrument to print data transmitted from the data transmitting instrument, the print data including image data to be printed by the printing section and print information concerning the print data, the receiving section being connected to the data transmitting instrument through a communication line; and
controlling section for performing control to take the message information concerning the image data out of the print data received by the receiving section and to print contents of the message information and of the image data by the printing section.

14. The printing machine according to claim 13,
wherein the controlling section controls the printing section to print the print information included in the print data together with the message information.

15. The printing machine according to claim 13,
wherein the data transmitting instrument is composed of a printer driver corresponding to the printing section.

16. A printing method comprising the steps of:
receiving message-added print data through a communication line from a data transmitting instrument, the message-added print data being obtained by adding message information made by the data transmitting instrument to print data transmitted from the data transmitting instrument, the print data including image data to be printed by the printing section and print information concerning the print data;
taking the message information out of the received message-added print data; and
printing contents of the message information and of the image data.

17. The printing method according to claim 16,
wherein the step of printing the message information prints the print information included in the print data together therewith.

18. The printing method according to claim 16,
wherein the data transmitting instrument is composed of a printer driver corresponding to the printing section.

19. A printing system for printing print data by a printing machine, the print data being transmitted from a data transferring apparatus to be printed by the printing machine connected thereto through a communication line comprising:
a data transferring apparatus including: operation inputting section for making message information to be added to the print data including image data and print information concerning the image data in response to an operation by a user; print-data making section for making message-added print data by adding the message information made by the operation inputting section to the print data; and transmitting section for transmitting the message-added print data made by the print-data making section to a printing controlling apparatus connected to the printing machine through the communication line;
the printing controlling apparatus for receiving the message-added print data transmitted from the transmitting section and for outputting at least the image data to the printing machine; and
the printing machine for performing printing by use of the image data transmitted from the printing controlling apparatus.

20. A printing system comprising:
a data transmitting apparatus for transmitting message-added print data obtained by adding message information to print data including image data and print information concerning the image data; and
a printing machine including: printing section for performing printing; receiving section for receiving the message-added print data, the receiving section being connected to the data transmitting apparatus through a communication line; displaying section for displaying the message information included in the message-added print data received by the receiving section; controlling section for performing control to take the message information concerning the image data out of the print data received by the receiving section and to display contents of the message information on the displaying section.

21. A printing system comprising:
a data transmitting apparatus for transmitting message-added print data obtained by adding message information to print data including image data and print information concerning the image data; and
a printing machine including: printing section for performing printing; receiving section for receiving the message-added print data, the receiving section being connected to the data transmitting apparatus through a communication line; and controlling section for performing control to take the message information concerning the image data out of the print data received by the receiving section and to print contents of the message information and of the image data by the printing section.
